# FASCICULE DE BREVET EUROPEEN

(11) **EP 3 873 701 B1**
(45) Date de publication et mention de la délivrance du brevet: **12.10.2022**
(21) Numéro de dépôt: 19790244.8
(22) Date de dépôt: 28.10.2019
(51) Int. Cl.: B25J 9/00, B25J 9/14, F15B 15/14

(54) **DISPOSITIF DESTINE A ETRE POSITIONNE A PROXIMITE D'UNE ARTICULATION ET SYSTEME COMPORTANT UN TEL DISPOSITIF**
VORRICHTUNG ZUR POSITIONIERUNG IN DER NÄHE EINES GELENKS UND ALLGEMEINES SYSTEM MIT EINER SOLCHEN VORRICHTUNG
DEVICE DESIGNED TO BE POSITIONED CLOSE TO A JOINT AND GENERAL SYSTEM COMPRISING SUCH A DEVICE

(30) Priorité: 29.10.2018 FR 1860006
(43) Date de publication de la demande: 08.09.2021
(73) Titulaire: Safran Electronics & Defense, 75015 Paris (FR)
(72) Inventeur: LAROSE, Pascal, Québec QC J1H 1M4 (CA); DENNINGER, Marc, Québec QC J1H 1M4 (CA); LUCKING BIGUE, Jean-Philippe, Québec QC J1H 1M4 (CA); PLANTE, Jean-Sébastien, Québec QC J1H 1M4 (CA); VERONNEAU, Catherine, Québec QC J1H 1M4 (CA); GRENIER, Jordane, 92100 Boulogne-Billancourt (FR)
(74) Mandataire: Decorchemont, Audrey Véronique Christèle
(86) Numéro de dépôt international: PCT/EP2019/079398
(87) Numéro de publication internationale: WO 2020/089169

(56) Documents cités:
- EP-A1- 1 382 317
- US-A1- 2010 204 627
- US-A1- 2011 166 489

## Description

L'invention concerne un dispositif destiné à être positionné à proximité d'une articulation.

L'invention concerne également un système général comportant un tel dispositif.

### ARRIERE PLAN TECHNOLOGIQUE DE L'INVENTION

Un exosquelette permet d'augmenter les capacités physiques d'une personne afin de lui faciliter la réalisation de certaines tâches. Les exosquelettes peuvent ainsi être employés dans de nombreuses applications qu'elles soient militaires, médicales, industrielles ... et dans une optique de rééducation, de palliation, d'aide ...

Il s'avère toutefois relativement complexe de réaliser un exosquelette qui puisse suivre les mouvements naturels de l'utilisateur notamment pour des articulations complexes de type cheville ou genou. L'exosquelette doit ainsi pouvoir actionner l'articulation de manière synchrone avec les mouvements de l'utilisateur pour pouvoir l'assister de manière efficace.

Le document US 2010/0204627 A1 montre un dispositif selon le préambule de la revendication 1.

### OBJET DE L'INVENTION

Un but de l'invention est de proposer un dispositif permettant un actionnement d'une articulation de manière efficace ainsi qu'un système général comprenant un tel dispositif.

### BREVE DESCRIPTION DE L'INVENTION

En vue de la réalisation de ce but, on propose un dispositif destiné à être positionné à proximité d'une articulation entre deux parties, le dispositif comprenant une première interface portée par une première des deux parties et une deuxième interface portée par une deuxième des deux parties, le dispositif comprenant au moins une connexion entre la première interface et la deuxième interface.

Selon l'invention, la connexion comporte un double vérin qui comporte deux chambres reliées entre elles par un piston flottant, une première des deux chambres étant liée à la première interface et une deuxième des deux chambres étant liée à une tige de sortie du double vérin, ladite tige étant reliée à la deuxième interface, le déplacement de la deuxième chambre vis-à-vis de la première chambre via le piston flottant permettant ainsi, par la tige de sortie, de bouger en service la deuxième partie de l'articulation par rapport à la première partie de l'articulation.

L'invention autorise donc de manière simple et efficace un déplacement des deux parties de l'articulation l'une par rapport à l'autre notamment de par la configuration du double vérin.

Optionnellement, la tige de sortie est montée directement sur la deuxième interface.

Optionnellement, la tige de sortie est articulée sur la deuxième interface.

Optionnellement, la tige de sortie est fixée à la deuxième chambre.

Optionnellement, le dispositif comporte au moins un guide du coulissement de la deuxième chambre vis-à-vis de la première chambre.

Optionnellement, le guide comporte au moins un ensemble coussinet/arbre de guidage.

Optionnellement, le dispositif comporte deux guides de coulissement de la deuxième chambre vis-à-vis de la première chambre, les guides étant agencés de part et d'autre du double vérin.

Optionnellement, le guide de coulissement est externe au double vérin.

Optionnellement, le dispositif comporte au moins une connexion secondaire limitant un risque de coulissement non souhaité de la première interface le long de la partie associée.

Optionnellement, la connexion secondaire comporte une barrette fixée au moins à l'une de ses extrémités à au moins l'une des interfaces.

Optionnellement, la connexion secondaire comporte une biellette articulée au moins à l'une de ses extrémités à au moins l'une des interfaces.

Optionnellement, le dispositif est conformé pour être positionné en service à proximité d'une cheville d'un utilisateur, la première interface étant positionnée sur une jambe de l'utilisateur et la deuxième interface sur le pied de l'utilisateur.

Optionnellement, la deuxième interface est conformée pour être en contact avec la semelle d'une chaussure de l'utilisateur.

On propose également un système général porté par un utilisateur, ledit système général comprenant un dispositif tel que décrit précédemment ainsi qu'un bloc d'alimentation dudit dispositif.

Optionnellement, le bloc d'alimentation comporte au moins un embrayage à fluide magnéto-rhéologique.

D'autres caractéristiques et avantages de l'invention ressortiront à la lecture de la description qui suit d'un mode de réalisation particulier non limitatif de l'invention.

### BREVE DESCRIPTION DES DESSINS

L'invention sera mieux comprise à la lumière de la description qui suit en référence aux figures annexées ci-jointes parmi lesquelles :
- la figure 1 est une vue en perspective d'un système général porté par un utilisateur et comprenant au moins un dispositif selon un mode de réalisation particulier de l'invention qui est positionné à proximité d'une articulation dudit utilisateur ;
- la figure 2 est une vue en perspective agrandie du dispositif illustré à la figure 1, porté par l'utilisateur,
- la figure 3 est une vue en coupe longitudinale du dispositif seul illustré à la figure 2, le double vérin étant en position déployée,
- la figure 4 est une vue similaire à celle de la figure 3, le double vérin étant en position rétractée,
- la figure 5 est une vue en perspective agrandie du bloc d'alimentation du système illustré à la figure 1.

### DESCRIPTION DETAILLEE DE L'INVENTION

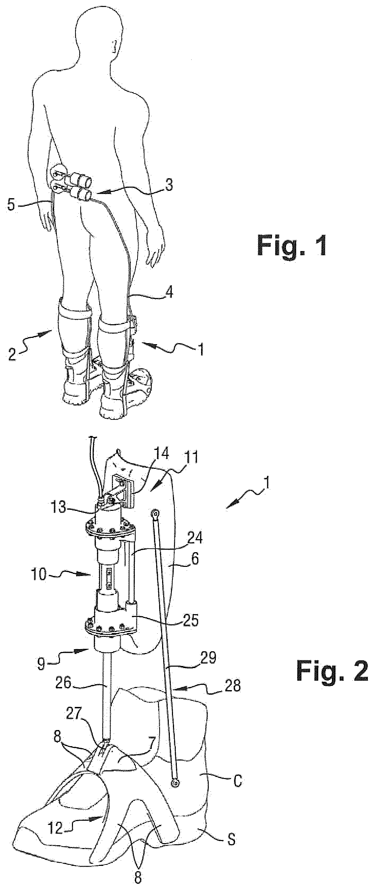

En référence à la figure 1, selon un mode de réalisation particulier de l'invention, le système général comporte un premier dispositif 1 associé à la cheville droite d'un utilisateur et un deuxième dispositif 2 associé à la cheville gauche de l'utilisateur ainsi qu'un bloc d'alimentation 3 en fluide (qui peut être un gaz, un liquide visqueux ou non ... on préférera toutefois avoir recours à un liquide, visqueux ou non, plutôt qu'à un gaz) du premier dispositif 1 et du deuxième dispositif 2. Le système comporte ainsi un premier canal 4 de raccordement du bloc d'alimentation 3 au premier dispositif 1 et un deuxième canal 5 de raccordement du bloc d'alimentation 3 au deuxième dispositif 2, les deux canaux 4, 5 étant également portés par l'utilisateur. Le bloc d'alimentation 3 est par ailleurs agencé au niveau du bas du dos de l'utilisateur par exemple par une ou des sangles, un sac-à-dos, une ceinture, un ou des élastiques ...

Le premier dispositif 1 va être à présent décrit en référence aux figures 2 à 4. Le deuxième dispositif 2 étant ici identique au premier dispositif 1, la description qui suit est également applicable au deuxième dispositif 2.

Le dispositif 1 comporte une première interface 11 qui est agencée sur la jambe de l'utilisateur (la jambe étant ici la partie du corps humain s'étendant entre le genou et la cheville). Par exemple des sangles (non représentées ici) ou tout autre moyen d'attache permettent de solidariser la première interface 11 à la jambe. La première interface 11 est de préférence agencée à l'avant de la jambe de l'utilisateur au niveau du tibia. De la sorte la première interface 11 surplombe le pied de l'utilisateur.

La première interface 11 est avantageusement conformée de manière à épouser la forme avant de la jambe. La première interface 11 comporte à cet effet une coque 6 dont la surface destinée à être en contact avec l'utilisateur est concave, de concavité similaire à celle du tibia de l'utilisateur.

Le dispositif 1 comporte par ailleurs une deuxième interface 12 qui est agencée sur le pied de l'utilisateur. La deuxième interface 12 comporte par exemple une platine 7 prolongée de quatre bras d'attache 8 à la chaussure C de l'utilisateur.

De préférence les bras d'attache 8 sont dimensionnés pour autoriser une fixation de la deuxième interface 12 à la semelle S de ladite chaussure C. Les bras d'attache 8 peuvent s'étendre de manière à être en contact avec le sol ou peuvent s'étendre jusqu'à la semelle S seulement qui est elle-même en contact avec le sol.

De préférence les bras d'attache 8 sont répartis de façon symétrique côté interne et côté externe de la chaussure C.

On assure ainsi une bonne répartition des efforts exercés par la deuxième interface 12 sur la chaussure C lors d'un mouvement relatif entre les deux interfaces 11, 12.

La deuxième interface 12 est donc agencée sur le dessus et les côtés du pied de l'utilisateur.

On note que les deux interfaces 11, 12 sont ici rigides.

Par ailleurs le dispositif comporte une connexion principale 9 de la première interface 11 à la deuxième interface 12.

A cet effet, la connexion principale 9 comprend un double vérin 10 qui comporte deux chambres 21, 22 reliées entre elles par un piston flottant 23. Afin d'assurer une étanchéité entre les deux chambres 21, 22, deux membranes déroulantes sont respectivement agencées entre l'une des chambres 21, 22 et le piston flottant 23. Le double vérin 10 peut ainsi également être appelé double vérin à membrane déroulante (« double rolling diaphragm cylinder » en anglais).

Le double vérin 10 s'étend sensiblement longitudinalement selon un axe X. Le dispositif est agencé de manière que ledit axe X soit ici sensiblement vertical.

Une première 21 des deux chambres est liée à la première interface 11. La première chambre 21 est ici directement montée sur la première interface 11.

La première chambre 21 est par exemple montée articulée sur la première interface 11.

Typiquement, la première chambre 21 est articulée sur la première interface 11 par une liaison rotule ou encore par une liaison pivot.

Typiquement l'extrémité supérieure 13 de la première chambre 21 est montée articulée à une extrémité proximale 14 de la première interface 11.

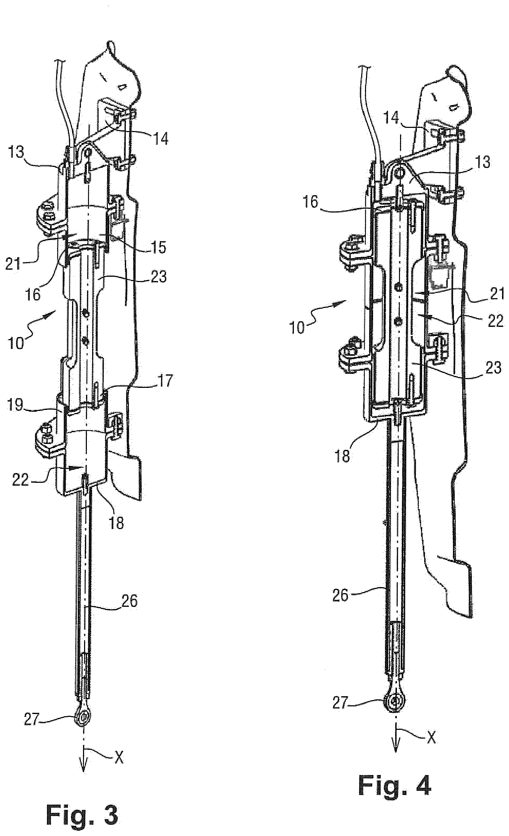

La première chambre 21 peut donc pivoter vis-à-vis de la première interface 11. Par ailleurs, le piston 23 est mobile en translation dans la première chambre 21 selon l'axe X entre une position haute (illustrée à la figure 4) dans laquelle l'extrémité proximale 16 du piston 23 est sensiblement au niveau de l'extrémité supérieure 13 de la première chambre 21 et une position basse (illustrée à la figure 3) dans laquelle l'extrémité proximale 16 du piston 23 est sensiblement au niveau de l'extrémité inférieure 15 de la première chambre 21.

Par ailleurs la deuxième chambre 22 est également mobile en translation vis-à-vis de la première chambre 21 selon l'axe X et mobile en translation vis-à-vis du piston 23 selon l'axe X entre une position haute (illustrée à la figure 4) dans laquelle la deuxième chambre 22 est en contact avec la première chambre 21, l'extrémité distale 17 piston 23 étant alors sensiblement au niveau de l'extrémité inférieure 18 de la deuxième chambre 22, et une position basse (illustrée à la figure 3) dans laquelle la deuxième chambre 22 est éloignée de la première chambre 21, l'extrémité distale 17 du piston 23 étant sensiblement au niveau de l'extrémité supérieure 19 de la deuxième chambre 22.

On note ainsi que les deux chambres 21, 22 font partie du même double vérin 10 mais sont formées chacune par des bâtis distincts afin d'assurer le déplacement relatif des deux chambres 21, 22 entre elles.

Le déplacement du piston flottant 23 et de la deuxième chambre 22 vis-à-vis de la première chambre 21 est assuré par l'alimentation en fluide du double vérin 10 par le bloc d'alimentation 3. A cet effet, le canal de raccordement 4 débouche dans le double vérin 10 au niveau de l'extrémité supérieure 13 de la première chambre 21. La première chambre 21, la deuxième chambre 22 et le piston flottant 23 étant tous les trois creux, le fluide peut ainsi circuler entre ces trois parties 21, 22, 23 pour autoriser un déploiement ou une rétraction du piston flottant 23.

Le double vérin 10 présente donc une configuration en série ce qui lui autorise une course relativement longue.

Afin de guider le déplacement relatif des deux chambres 21, 22 entre elles, le double vérin 10 comporte au moins un coussinet coulissant le long d'un arbre de guidage, coussinet et arbre de guidage étant associés aux deux chambres 21, 22 tout en étant agencés à l'extérieur des deux chambres 21, 22 et du piston flottant 23.

Dans le cas présent, le double vérin 10 comporte deux arbres de guidage 24 (dont un seul est visible sur les figures) rigidement fixés à la première chambre 21 de manière à s'étendre à l'extérieur de la première chambre 21 de part et d'autre de la première chambre 21, les arbres de guidage 24 étant ainsi fixes vis-à-vis de ladite première chambre 21. Les deux arbres 24 s'étendent donc sensiblement parallèlement à l'axe X respectivement à droite et à gauche du double vérin 10. De manière correspondante, la deuxième chambre 22 comporte deux coussinets 25 (dont un seul est visible sur les figures) coulissant respectivement dans l'un des arbres de guidage 24, les coussinets 25 étant rigidement fixés à la deuxième chambre 22.

Par ailleurs, le double vérin 10 comporte une tige de sortie 26 qui est liée à la deuxième chambre 22. La tige de sortie 26 est ici rigidement fixée à sa première extrémité à l'extrémité basse 18 de la deuxième chambre 22.

De façon préférée, la tige de sortie 26 est directement montée à sa deuxième extrémité 27 sur la deuxième interface 12. Ceci permet d'actionner directement la deuxième interface 12 par la tige de sortie 26 sans mécanisme d'actionnement intermédiaire.

De préférence également, la deuxième extrémité 27 de la tige de sortie 26 est articulée sur la deuxième interface 12.

On limite ainsi un risque d'abîmer la tige de sortie 26 lorsqu'elle appuie sur la deuxième interface 12. En outre, ceci permet au dispositif de suivre plus naturellement les mouvements de la cheville de l'utilisateur.

Typiquement, la tige de sortie 26 est articulée sur la deuxième interface 12 par exemple par une liaison rotule ou encore par une liaison pivot.

La tige de sortie 26 est ici montée sur la deuxième interface 12 au niveau de la platine 7 de la deuxième interface 12. La tige de sortie 26 agit en conséquence sur la deuxième interface 12 de manière décalée vis-à-vis de l'axe d'articulation en flexion naturel de la cheville de l'utilisateur. En particulier la tige de sortie 26 agit sur les bras d'attache 8 qui agissent eux-mêmes sur le sol ou sur la semelle S (selon la dimension des bras d'attache 8).

On note par ailleurs que la tige de sortie 26 forme une structure rigide assurant une bonne transmission des efforts entre les deux interfaces 11, 12.

En service, partant d'une situation dans laquelle le double vérin 10 est en position rétractée (représentée à la figure 4), lorsque le bloc d'alimentation 3 alimente en fluide le double vérin 10 ceci va provoquer le déplacement progressif du piston flottant 23 et de la deuxième chambre 22 vis-à-vis de la première chambre 22 d'une part et de la deuxième chambre 22 vis-à-vis du piston flottant 23 d'autre part potentiellement jusqu'à ce que le double vérin 10 se trouve en position déployée (représentée à la figure 3).

La tige de sortie 26 exerce en conséquence progressivement un effort de poussée sur la deuxième interface 12 provoquant une rotation de la deuxième interface 12 vis-à-vis de la première interface 11 et donc une rotation de la cheville.

Le dispositif permet ainsi d'aider l'utilisateur dans ses déplacements, que ce soit pour la marche ou la course et ce pour des applications civiles comme militaires.

Le dispositif ainsi décrit s'avère relativement simple de construction et autorise une action directe sur la deuxième interface 12 via la tige de sortie 26 du double vérin 10.

Ceci permet d'avoir un dispositif efficace car très réactif. En particulier le dispositif décrit s'affranchit de mécanismes de type poulies-courroies qui pourraient être trop élastiques.

Le dispositif s'avère par ailleurs robuste.

De façon particulière, le dispositif est agencé de manière que lorsque le double vérin 10 est dans une position médiane entre sa position déployée et sa position rétractée, le pied de l'utilisateur est sensiblement dans un plan horizontal.

Selon un mode de réalisation privilégié, afin d'éviter que la première interface 11 ne remonte le long du tibia par réaction lorsque la tige de sortie 26 exerce une poussée sur la deuxième interface 12, le dispositif comporte au moins une connexion secondaire 28 agencée ici entre la première interface 11 et la chaussure C de l'utilisateur.

De préférence, le dispositif comporte deux connexions secondaires 28 (dont une seule est visible sur les figures) qui sont chacune agencées entre la première interface 11 et la chaussure C de l'utilisateur. Chaque connexion secondaire 28 est typiquement agencée sur respectivement l'un des côtés droit et gauche du double vérin 10 et à l'extérieur du double vérin 10.

Typiquement chaque connexion secondaire 28 se présente sous la forme d'une barrette 29 rigidement fixée à une première extrémité à la première interface 11 et rigidement fixée à une deuxième extrémité à la chaussure C.

Les différentes barrettes 29 forment des structures rigides permettant de reprendre les efforts générés par la connexion principale 9 et ainsi d'éviter des déplacements parasites de la première interface 11, et notamment une remontée de la première interface 11 le long du tibia de l'utilisateur.

Optionnellement, les barrettes 29 sont fixées à leur deuxième extrémité à la chaussure C. Par exemple, chaque barrette 29 est agencée de manière à être fixée sur une respective des extrémités latérales de la première interface 11 et à être fixée sur un des côtés latéraux externes correspondant de la chaussure C.

Chaque barrette 29 est par ailleurs de préférence agencée de manière à être fixée sur la chaussure C sensiblement au niveau de l'axe d'articulation en flexion de la cheville.

On minimise ainsi les déplacements parasites de la première interface 11 relativement à l'utilisateur comme notamment le glissement de l'interface 11 le long du tibia de l'utilisateur.

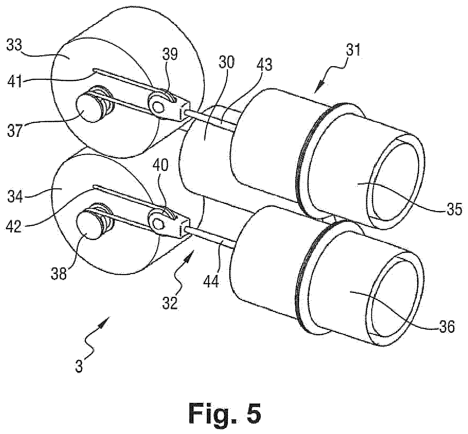

En référence à la figure 5, on va à présent décrire le bloc d'alimentation 3 selon un mode de réalisation particulier de l'invention.

Le bloc d'alimentation 3 comporte ici une source d'alimentation 30, comme par exemple un moteur, liée à un premier organe d'alimentation 31 associé au premier dispositif 1 et à un deuxième organe d'alimentation 32 associé au deuxième dispositif 2, la même source d'alimentation 30 alimentant ainsi les deux organes d'alimentation 31, 32.

On limite en conséquence la masse du bloc d'alimentation 3 mais également son encombrement. Dans le présent cas, l'utilisation d'une seule source d'alimentation 30 est astucieuse puisque les dispositifs 1, 2 nécessitent une alimentation alternée et non simultanée pour assister l'utilisateur dans ses mouvements de marche.

Typiquement chaque organe d'alimentation 31, 32 comporte un embrayage 33, 34 à fluide magnéto-rhéologique comportant un arbre d'entrée reliée à la source d'alimentation 30 et un arbre de sortie. En service l'arbre d'entrée entraîné en rotation par la source d'alimentation 30 entraîne à son tour en rotation l'arbre de sortie lorsque le fluide magnéto-rhéologique présent dans l'embrayage 33, 34 est suffisamment visqueux. Si le fluide magnéto-rhéologique est trop liquide, les deux arbres ne sont en effet pas liés en rotation. En jouant ainsi sur la viscosité du fluide magnéto-rhéologique, on peut donc contrôler le couple transmis entre les deux arbres.

Ceci permet un contrôle fin de l'alimentation transmise aux dispositifs 1, 2.

Chaque organe d'alimentation 31, 32 comporte par ailleurs un mécanisme de sortie assurant la transmission du fluide jusqu'au dispositif associé. A cet effet, chaque mécanisme de sortie comporte un actionneur de sortie 35, 36 relié à l'arbre de sortie de l'embrayage 33, 34 associé par exemple par un système poulie-courroie et/ou tout autre transmission tels que câble, câble Bowden, chaine ...

De façon particulière, la transmission entre l'arbre de sortie et l'actionneur de sortie 35, 36 comporte une poulie motrice 37, 38 solidaire de l'arbre de sortie et une poulie réceptrice 39, 40 associée ainsi qu'une courroie 41, 42 solidaire à une extrémité de la poulie motrice 37, 38 et à une autre extrémité à un bâti fixe, la courroie 41, 42 s'enroulant par ailleurs autour de la poulie réceptrice 39, 40. Par ailleurs, l'actionneur de sortie 35, 36 comporte un bras d'actionnement 43, 44 solidaire de la poulie réceptrice 39, 40 de sorte qu'une rotation de l'arbre de sortie entraîne un déplacement de la courroie 41, 42 et par là une traction sur le bras d'actionnement 43, 44. Le rapport entre la poulie motrice 37, 38 et la poulie réceptrice 39, 40 est par exemple de 2 : 1 mais d'autres rapports sont envisageables.

Le déplacement du bras d'actionnement 43, 44 provoque alors un déplacement du fluide dans l'actionneur de sortie 35, 36 et par là un déplacement du fluide dans le canal à destination du dispositif 1, 2 associé.

L'actionneur de sortie 35, 36 est par exemple un vérin simple à diaphragme déroulant, un vérin sans diaphragme déroulant ...

Pour plus d'informations sur le bloc d'alimentation 3, on pourra se référer au bloc d'alimentation décrit dans la demande internationale PCT/CA2018/050570 déposée le 14 mai 2018 et incorporée ici par référence.

Bien entendu l'invention n'est pas limitée au mode de réalisation décrit et on peut y apporter des variantes sans sortir du cadre de l'invention tel que défini par les revendications.

Typiquement, bien qu'ici le dispositif soit associé à un système général, le dispositif pourra être autonome. Le dispositif pourra ainsi comporter son propre bloc d'alimentation qui pourra être à proximité d'une ou des deux interfaces, porté par l'une ou les deux interfaces ou agencé de manière déportée vis-à-vis des deux interfaces.

Par ailleurs, bien qu'ici le dispositif ait été associé à une cheville, le dispositif pourra être associé à d'autres articulations comme par exemple un genou, un poignet ...

Le dispositif pourra être utilisé dans de nombreuses applications et être ou faire partie par exemple d'un exosquelette, d'une orthèse, d'une prothèse, d'un système portable, d'un système intégré à un robot ...

De la même manière, bien qu'ici le dispositif soit porté par un humain, le dispositif pourra être porté par un robot.

L'une ou les deux interfaces d'un dispositif pourront être directement intégrées aux vêtements ou aux chaussures d'un utilisateur au lieu d'être rapportées sur eux comme ceci a été décrit. Par exemple la deuxième interface pourra être partie intégrante de la chaussure de l'utilisateur.

La première chambre pourra être rigidement fixée à la première interface et non articulée sur elle. Dans ce cas si le double vérin comporte un ou des arbres de guidage, ceux-ci pourront être rigidement fixés à la première chambre et/ou à la première interface. Dans ce cas de figure, la tige de sortie pourra alors être articulée sur la deuxième chambre et ne pas être rigidement fixée à elle.

La tige de sortie pourra être rigidement fixée à la deuxième interface et non articulée sur elle. De même, la tige de sortie pourra être articulée sur la deuxième chambre et ne pas être rigidement fixée à elle. La tige pourra ne pas être directement reliée à la deuxième chambre et/ou à la deuxième interface. On pourra par exemple agencer un système poulie (s) -courroie (s) (ou tout autre mécanisme de liaison) entre la tige de sortie et par exemple la deuxième interface et/ou la deuxième chambre.

Le dispositif pourra comporter un nombre différent de connexions entre les deux interfaces. Le dispositif pourra ainsi ne comporter qu'une seule connexion.

Si le dispositif comporte des connexions secondaires celles-ci pourront être différentes de ce qui a été indiqué.

Par exemple en place de barrettes rigidement fixées on pourra avoir des biellettes articulées à l'une ou à leurs deux extrémités par exemple par des liaisons pivots ou bien encore des liaisons rotules. On conférera ainsi une meilleure souplesse au dispositif. Les biellettes pourront par exemple être articulées à leur première extrémité à la première interface et à leur deuxième extrémité à la chaussure. Par exemple, dans le cas d'un couple de biellette, chaque biellette pourra être agencée de manière à être articulée sur une respective des extrémités latérales de la première interface et à être articulée sur un des côtés latéraux externes correspondant de la chaussure. Chaque biellette pourra par ailleurs être agencée de manière à être articulée sur la chaussure sensiblement au niveau de l'axe d'articulation en flexion de la cheville. Les différentes biellettes formeront alors des structures rigides permettant de reprendre les efforts générés par la connexion principale et ainsi d'éviter des déplacements parasites de la première interface, et notamment une remontée de la première interface le long du tibia de l'utilisateur.

Dans tous les cas, la ou les connexions secondaires pourront être articulées ou fixées à leur deuxième extrémité à la semelle de la chaussure et non au corps de la chaussure comme cela a été illustré. De la même manière, la ou les connexions secondaires pourront être articulées ou fixées à leur deuxième extrémité à la deuxième interface et non directement à la chaussure comme cela a été illustré. On pourra par exemple envisager que la deuxième interface s'étende au moins jusqu'au au niveau de l'axe d'articulation en flexion de la cheville afin de permettre potentiellement à au moins une connexion secondaire d'être attachée à la deuxième interface au niveau de cet axe d'articulation.

Une connexion secondaire sera de préférence liée à au moins l'une de ses extrémités à au moins l'une des interfaces.

La connexion secondaire pourra comporter un vérin en place d'une structure rigide comme une barrette ou une biellette ou bien encore des sangles ou des organes de rappel de type ressort ou élastiques.

Les connexions secondaires pourront être portées par la première interface et/ou la deuxième interface et/ou un vêtement ou une chaussure de l'utilisateur. Une connexion secondaire pourra ainsi être directement portée à chacune de ses extrémités par l'une des deux interfaces respectives.

Le double vérin pourra comporter d'autres guides que les ensembles coussinet/arbre de guidage décrits. Par exemple les guides pourront être des vérins télescopiques ou des ensembles poulies/courroies. Le double vérin pourra ne pas comporter de guide ou comporter un nombre différent de guide que ce qui a été indiqué.

Le double vérin pourra retourner à sa position rétractée naturellement (lorsque le pied vient reposer complètement sur le sol) et/ou de manière contrôlée par aspiration du fluide hors du double vérin et/ou par l'intermédiaire d'un organe de rappel comme un ressort ... Le bloc d'alimentation pourra éventuellement produire un couple pour compenser un effort qui serait produit par un organe de rappel.

Le dispositif pourra comporter d'autres éléments que ce qui a été indiqué comme par exemple un ou plusieurs capteurs pour mesurer l'effort exercé par le pied de l'utilisateur sur le sol ou l'effort exercé par la deuxième interface sur la chaussure ou l'effort exercé au niveau de la zone d'appui de la tige de sortie sur la deuxième interface ... le ou les capteurs pourront mesurer d'autres paramètres comme une température, une pression, une accélération, une position ...

Les interfaces pourront prendre une autre forme que celles décrites. Par exemple chaque interface pourra prendre la forme d'un manchon. D'autres moyens que des sangles pourront être utilisés pour attacher les interfaces à l'utilisateur comme des élastiques, des bandes d'attache de type crochet/boucle (comme le produit commercialisé sous la marque Velcro) ...

De même le bloc d'alimentation associé au dispositif pourra être différent de ce qui a été indiqué. Par exemple le bloc d'alimentation pourra ne pas comporter d'embrayage entre le moteur et l'actionneur principal ou alors un embrayage différent par exemple qui n'est pas à fluide magnéto-rhéologique. Le bloc d'alimentation pourra également ne pas comporter d'actionneur de sortie le moteur et/ou l'embrayage alimentant directement le dispositif. Le bloc d'alimentation pourra également comporter un ou des réducteurs de vitesse. Le nombre d'éléments au sein du bloc d'alimentation pourra ainsi varier. On pourra par exemple associer un moteur différent à chaque dispositif ou bien encore associer un même embrayage à plusieurs dispositifs.

Tout ou partie du bloc d'alimentation pourra être portée ou faire partie du dispositif.

Le système pourra comporter un nombre différent de dispositif que ce qui a été décrit et par exemple un seul dispositif.

## Revendications

1. Dispositif destiné à être positionné à proximité d'une articulation entre deux parties, le dispositif comprenant une première interface (11) portée par une première des deux parties et une deuxième interface (12) portée par une deuxième des deux parties, le dispositif comprenant au moins une connexion (9) entre la première interface et la deuxième interface, le dispositif étant **caractérisé en ce que** la connexion comporte un double vérin (10) qui comporte deux chambres (21, 22) reliées entre elles par un piston flottant (23), une première des deux chambres étant liée à la première interface et une deuxième des deux chambres étant liée à une tige de sortie (26) du double vérin, ladite tige étant reliée à la deuxième interface, le déplacement de la deuxième chambre vis-à-vis de la première chambre via le piston flottant permettant ainsi, par la tige de sortie, de bouger en service la deuxième partie de l'articulation par rapport à la première partie de l'articulation.

2. Dispositif selon la revendication 1, dans lequel la tige de sortie (26) est montée directement sur la deuxième interface (12).

3. Dispositif selon la revendication 2, dans lequel la tige de sortie (26) est articulée sur la deuxième interface (12).

4. Dispositif selon l'une des revendications précédentes, dans lequel la tige de sortie (26) est fixée à la deuxième chambre (22).

5. Dispositif selon l'une des revendications précédentes, comportant au moins un guide du coulissement de la deuxième chambre vis-à-vis de la première chambre.

6. Dispositif selon la revendication 5, dans lequel le guide comporte au moins un ensemble coussinet/arbre de guidage.

7. Dispositif selon l'une des revendications 5 ou 6, comportant deux guides de coulissement de la deuxième chambre (22) vis-à-vis de la première chambre (21), les guides étant agencés de part et d'autre du double vérin (10).

8. Dispositif selon l'une des revendications 5 à 7, dans lequel le guide de coulissement est externe au double vérin.

9. Dispositif selon l'une des revendications précédentes, comportant au moins une connexion secondaire (28) limitant un risque de coulissement non souhaité de la première interface (11) le long de la partie associée.

10. Dispositif selon la revendication 9, dans lequel la connexion secondaire comporte une barrette (29) fixée à au moins l'une de ses extrémités à au moins l'une des interfaces.

11. Dispositif selon la revendication 9, dans lequel la connexion secondaire comporte une biellette articulée à au moins l'une de ses extrémités à au moins l'une des interfaces.

12. Dispositif selon l'une des revendications précédentes, le dispositif étant conformé pour être positionné en service à proximité d'une cheville d'un utilisateur, la première interface (11) étant positionnée sur une jambe de l'utilisateur et la deuxième interface (12) sur le pied de l'utilisateur.

13. Dispositif selon la revendication 12, dans lequel la deuxième interface (12) est conformée pour être en contact avec la semelle d'une chaussure de l'utilisateur.

14. Système comportant un dispositif selon l'une des revendications précédentes et un bloc d'alimentation (3) en fluide dudit dispositif.

15. Système selon la revendication 14, dans lequel le bloc d'alimentation comporte au moins un embrayage (33, 34) à fluide magnéto-rhéologique.

## Patentansprüche

1. Vorrichtung, die dazu bestimmt ist, in der Nähe eines Gelenks zwischen zwei Teilen positioniert zu sein, wobei die Vorrichtung eine erste Schnittstelle (11), die von einem ersten der beiden Teile getragen wird, und eine zweite Schnittstelle (12) umfasst, die von einem zweiten der beiden Teile getragen wird, wobei die Vorrichtung mindestens eine Verbindung (9) zwischen der ersten Schnittstelle und der zweiten Schnittstelle umfasst, wobei die Vorrichtung **dadurch gekennzeichnet ist, dass** die Verbindung einen doppelten Zylinder (10) umfasst, der zwei Kammern (21, 22) enthält, die miteinander über einen Schwimmkolben (23) verbunden sind, wobei eine erste der beiden Kammern mit der ersten Schnittstelle und eine zweite der beiden Kammern mit einer Ausgangsstange (26) des doppelten Zylinders verbunden ist, wobei die genannte Stange mit der zweiten Schnittstelle verbunden ist, wobei die Verschiebung der zweiten Kammer in Bezug auf die erste Kammer über den Schwimmkolben somit durch die Ausgangsstange eine Bewegung des zweiten Teils des Gelenks in Bezug auf den ersten Teil des Gelenks im Gebrauch ermöglicht.

2. Vorrichtung nach Anspruch 1, bei der die Ausgangsstange (26) direkt an der zweiten Schnittstelle (12) angebracht ist.

3. Vorrichtung nach Anspruch 2, bei der die Ausgangsstange (26) an der zweiten Schnittstelle (12) angelenkt ist.

4. Vorrichtung nach einem der vorhergehenden Ansprüche, bei der die Ausgangsstange (26) an der zweiten Kammer (22) fixiert ist.

5. Vorrichtung nach einem der vorhergehenden Ansprüche, umfassend mindestens eine Führung zum Führen des Gleitens der zweiten Kammer in Bezug auf die erste Kammer.

6. Vorrichtung nach Anspruch 5, bei der die Führung mindestens eine Einheit aus Wellenlager/Führungswelle umfasst.

7. Vorrichtung nach einem der Ansprüche 5 oder 6, umfassend zwei Führungen zum Führen des Gleitens der zweiten Kammer (22) in Bezug auf die erste Kammer (21), wobei die Führungen zu beiden Seiten des doppelten Zylinders (10) angeordnet sind.

8. Vorrichtung nach einem der Ansprüche 5 bis 7, bei der die Führung zum Führen des Gleitens außerhalb des doppelten Zylinders ist.

9. Vorrichtung nach einem der vorhergehenden Ansprüche, umfassend mindestens eine sekundäre Verbindung (28), die ein Risiko eines unerwünschten Gleitens der ersten Schnittstelle (11) entlang des dazugehörigen Teils begrenzt.

10. Vorrichtung nach Anspruch 9, bei der die sekundäre Verbindung einen Stab (29) umfasst, der an mindestens einem seiner Enden an mindestens einer der Schnittstellen fixiert ist.

11. Vorrichtung nach Anspruch 9, bei der die sekundäre Verbindung eine Stange umfasst, die an mindestens einem ihrer Enden an mindestens einer der Schnittstellen angelenkt ist.

12. Vorrichtung nach einem der vorhergehenden Ansprüche, wobei die Vorrichtung so geformt ist, dass sie im Gebrauch in der Nähe eines Fußknöchels eines Benutzers positioniert ist, wobei die erste Schnittstelle (11) an einem Unterschenkel des Benutzers und die zweite Schnittstelle (12) an dem Fuß des Benutzers positioniert ist.

13. Vorrichtung nach Anspruch 12, bei der die zweite Schnittstelle (12) so geformt ist, dass sie mit der Sohle eines Schuhs des Benutzers in Kontakt ist.

14. System, umfassend eine Vorrichtung nach einem der vorhergehenden Ansprüche und einen Versorgungsblock (3) zur Versorgung der Vorrichtung mit Fluid.

15. System nach Anspruch 14, bei dem der Versorgungsblock mindestens eine Kupplung (33, 34) mit magnetorheologischer Flüssigkeit umfasst.

## Claims

1. A device for positioning in the proximity of a joint between two portions, the device comprising a first interface (11) carried by a first of the two portions and a second interface (12) carried by a second of the two portions, the device including at least one connection (9) between the first interface and the second interface, the device being **characterized in that** the connection comprises a double cylinder (10) having two chambers (21, 22) that are connected together by a floating piston (23), a first of the two chambers being connected to the first interface and a second of the two chambers being connected to an output rod (26) of the double cylinder, said rod being connected to the second interface, the second chamber moving in service relative to the first chamber via the floating piston thus enabling the output rod to move the second portion of the joint relative to the first portion of the joint.

2. A device according to claim 1, wherein the output rod (26) is mounted directly on the second interface (12).

3. A device according to claim 2, wherein the output rod (26) is hinged to the second interface (12)

4. A device according to any preceding claim, wherein the output rod (26) is fastened in fixed manner to the second chamber (22).

5. A device according to any preceding claim, including at least one guide for guiding sliding of the second chamber relative to the first chamber.

6. A device according to claim 5, wherein the guide comprises at least one bushing-and-guide-shaft assembly.

7. A device according to claim 5 or claim 6, including two guides for guiding sliding of the second chamber (22) relative to the first chamber (21), the guides being arranged on opposite sides of the double cylinder (10).

8. A device according to any one of claims 5 to 7, wherein the guide for guiding sliding is external to the double cylinder.

9. A device according to any preceding claim, including at least one secondary connection (28) limiting any risk of unwanted sliding of the first interface (11) along the associated portion.

10. A device according to claim 9, wherein the secondary connection comprises a bar (29) fastened in fixed manner at at least one of its ends to at least one of the interfaces.

11. A device according to claim 9, wherein the secondary connection comprises a connecting rod hinged at at least one of its ends to at least one of the interfaces.

12. A device according to any preceding claim, the device being shaped to be positioned in service in the proximity of a user's ankle, the first interface (11) being positioned on the user's shank and the second interface (12) being positioned on the user's foot.

13. A device according to claim 12, wherein the second interface (12) is shaped to be in contact with the sole of a user's boot.

14. A system comprising a device according to any preceding claim, and a power supply unit (3) for supplying fluid to said device.

15. A system according to claim 14, wherein the power supply unit includes at least one magneto-rheological fluid clutch (33, 34).
